# EUROPÄISCHE PATENTSCHRIFT

(11) **EP 0 631 360 B1**
(45) Veröffentlichungstag und Bekanntmachung des Hinweises auf die Patenterteilung: **03.12.1997**
(21) Anmeldenummer: 94107345.4
(22) Anmeldetag: 11.05.1994
(51) Int. Cl.: H02H 3/04, H02H 1/06, H01H 9/16

(54) **Vorrichtung und Verfahren zur Ueberwachung einer Schalterstellung**
Apparatus and method for monitoring the position of a switch
Dispositif et procédé de surveillance de la position d'un commutateur

(30) Priorität: 01.06.1993 DE 4318189
(43) Veröffentlichungstag der Anmeldung: 28.12.1994
(73) Patentinhaber: ASEA BROWN BOVERI AG, 5400 Baden (CH)
(72) Erfinder: Dijk, Ron, CH-5400 Baden (CH); Meng, Markus, CH-5424 Unterehrendingen (CH)

(56) Entgegenhaltungen:
- EP-A- 0 160 235
- DE-A- 3 108 264

## Beschreibung

### Technisches Gebiet

Die Erfindung bezieht sich auf das Gebiet der Schutztechnik und Stationsleittechnik.

Sie geht aus von einer Vorrichtung zur Überwachung der Schalterstellung eines Schalters nach dem Oberbegriff des ersten Anspruchs. Im weiteren betrifft sie ein Verfahren zur Überwachung einer Schalterstellung.

### Stand der Technik

Vorrichtungen zur Überwachung einer Schalterstellung werden beispielsweise für Hoch- und Mittelspannungsschaltanlagen verwendet. Der Hochspannungsschalter muss überwacht werden und weist zu diesem Zweck eine Reihe von mechanisch mit dem Hochspannungsschalter gekoppelten Hilfsschaltern auf. Die Hilfsschalter stehen in Verbindung mit einer Hilfsspannungsquelle. Die Hilfsspannungsquelle ist vorzugsweise als Niederspannungsquelle ausgeführt. Aus der Schalterstellung des Hilfsschalters kann wegen der mechanischen Kopplung direkt auf die Schalterstellung des Hochspannungsschalters geschlossen werden. Dies bringt den grossen Vorteil mit sich, dass für die Detektion der Schalterstellung keine hohen Spannungen gehandhabt werden müssen.

Die Hilfsspannungsquellen sind nun aber von Anlage zu Anlage verschieden, so dass für jede Anlage eine spezielle Überwachungseinrichtung hergestellt werden muss.

Ähnliche Probleme wie bei der Schalterüberwachung treten bei einer Überwachungseinrichtung auf, welche in der EP-B1-0 160 235 beschrieben wird. Die Erfindung nach der dieser Schrift löst die Aufgabe, den Auslösekreis eines Leistungsschalters auf Unterbrechung der Zuleitungen und auf Kurzschluss der Auslösespule zu überwachen, ohne dass eine eigene Stromversorgung für die Überwachungseinrichtung erforderlich ist. Dabei soll der Auslösekreis an unterschiedliche Speisespannungen anschliessbar sein.

Zur Stromversorgung des Überwachungseinrichtung wird deshalb zweckmässigerweise die Auslösespannung der Anlage verwendet. Die Stromaufnahme der Überwachungseinrichtung ist konstant, so dass die Anpassung an verschiedene Auslösespannungen mittels Vorwiderständen möglich ist. Damit muss zwar nicht mehr eine spezielle Schaltung für jede Anlage ausgelegt werden, die Schaltungen müssen jedoch immer noch nachträglich an die Hilfsspannungsquellen angepasst werden.

Für die automatisierte Herstellung solcher Schaltungen wäre es jedoch wünschenswert, wenn die Schaltungen nicht einmal mehr angepasst werden müssten. Im weiteren wäre es wünschenswert, wenn nicht nur die binäre Information "offen/geschlossen" sondern auch die Höhe der Hilfsspannung detektiert und übertragen werden könnte.

### Darstellung der Erfindung

Aufgabe der vorliegenden Erfindung ist es deshalb, eine Vorrichtung zur Überwachung der Schalterstellung eines Schalters anzugeben, welche für jede Hilfsspannungsquelle geeignet ist, ohne noch speziell angepasst werden zu müssen. Im weiteren soll auch die Höhe der Hilfsspannung detektiert werden können.

Diese Aufgabe wird bei einer Überwachungseinrichtung der eingangs genannten Art durch die Merkmale des ersten Anspruchs gelöst.

Im weiteren soll ein Verfahren zur Umwandlung der Schalterstellung in ein elektrisches Signal angegeben werden. Dies wird durch die Merkmale des neunten Anspruchs gelöst.

Kern der Erfindung ist es also, dass die Hilfsspannung Uo bei geschlossenem Schalter in eine pulsdauermodulierte Impulsfolge umgewandelt wird, deren Einschaltdauer mit zunehmender Höhe der Hilfsspannung abnimmt. Mit anderen Worten je kleiner die Hilfsspannung Uo ist, desto grösser ist die Einschaltdauer.

In einem bevorzugten Ausführungsbeispiel umfassen die ersten Mittel ein Anpassungsnetzwerk und einen Signalwandler. Die Umwandlung der Spannung Uo in eine pulsdauermoduliertes Signal erfolgt mittels eines A/D-Wandlers und eines Pulsdauer-Modulators. Bevorzugterweise wird das Signal von den zweiten Mitteln mittels eines Optokopplers auf eine Sekundärseite übertragen.

Das erfindungsgemässe Verfahren zeichnet sich dadurch aus, dass in einem ersten Schritt die Hilfsspannung in ein digitales Signal umgewandelt wird und dieses digitale Signal anschliessend periodisch in eine pulsdauermodulierte Impulsfolge transformiert wird, wobei die Einschaltdauer der Impulsfolge mit zunehmender Höhe der Hilfsspannung kleiner wird.

Der Zusammenhang zwischen der Einschaltdauer der Impulsfolge und der Höhe der Hilfsspannung wird besonders einfach, wenn die Einschaltdauer mit zunehmender Höhe der Hilfsspannung linear abnimmt.

Weitere Ausführungsbeispiele ergeben sich aus den Unteransprüchen.

Der grosse Vorteil der Erfindung liegt darin, dass für jede Hilfsspannungsquelle dieselbe Schaltung verwendet werden kann. Nicht einmal eine Abstimmung der Überwachungseinheiten mittels Vorwiderständen ist mehr nötig. Demzufolge kann die Herstellung der Überwachungseinheiten einfach automatisiert werden. Dieser Umstand widerspiegelt sich direkt in einem kostengünstigen Herstellungspreis und in erhöhter Zuverlässigkeit. Darüberhinaus kann aus der Einschaltdauer des pulsdauermodulierten Signals direkt auf die Höhe der Hilfsspannung geschlossen werden.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockdiagramm einer erfindungsgemässen Überwachungsvorrichtung;
- **Fig. 2**: Eine Schaltungsanordnung einer Ausführungsform der ersten Mittel;
- **Fig. 3**: Eine Ausführungsform der zweiten Mittel;
- **Fig. 4**: Ein Blockdiagramm des Signalwandlers; sowie
- **Fig. 5**: Die Einschaltdauer des pulsdauermodulierten Signals in Abhängigkeit der Spannung Uo.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

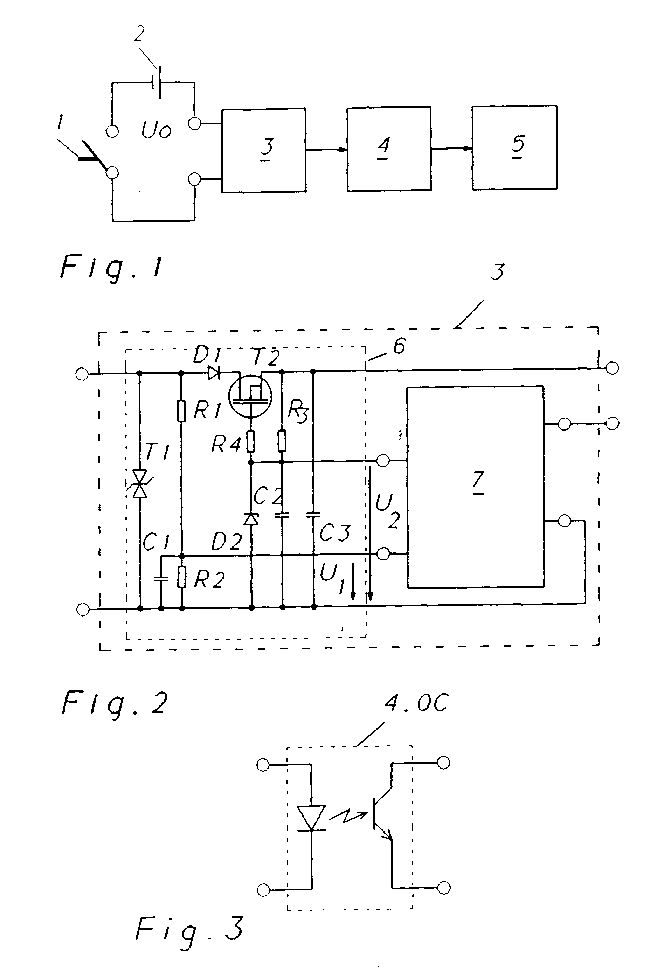

**Figur 1** zeigt ein Blockschaltbild einer erfindungsgemässen Überwachungsvorrichtung. Mit (1) ist ein Schalter bezeichnet. Dies kann beispielsweise ein Hilfsschalter eines Hochspannungsschalters sein. Dieser Hilfsspannungsschalter ist mechanisch mit dem Hochspannungsschalter gekoppelt, so dass aus der Stellung des Hilfsschalters in einfacher Weise auf die Stellung des Hochspannungsschalters geschlossen werden kann. Solche Hilfsschalter sind von grosser Bedeutung, ermöglichen sie doch die Überwachung eines Hochspannungsschalters auf kleinem Leistungsniveau.

Zur Überwachung der Schalterstellung des Schalters (1) ist dieser mit einer Hilfsspannungsquelle (2) verbunden, welche bei geschlossenem Schalter eine Spannung Uo abgibt. Mit dem Schalter (1) und der Hilfsspannungsquelle (2) sind erste Mittel (3) verbunden. Diese ersten Mittel (3) detektieren die Schalterstellung des Schalters (1) und wandeln die anhaftende binäre Information in ein elektrisches Signal um.

Dieses elektrische Signal wird von den zweiten Mitteln (4) auf eine vorzugsweise galvanisch getrennte Sekundärseite übertragen. Auf dieser Sekundärseite wird das übertragene elektrische Signal ausgewertet. Die Übertragung erfolgt vorzugsweise mittels Optokopplern. Andere galvanisch getrennte Übertragungsarten sind jedoch auch denkbar.

Da nun aber Schaltanlagen von Fall zu Fall verschiedene Hilfsspannungen aufweisen, müssen die Überwachungseinrichtungen von Hand und vor Ort an die vorhandene Hilfsspannung angepasst werden. Andernfalls würden für verschiedene Spannungen unterschiedliche Ansteuerströme des Optokopplers resultieren. Damit dies nicht der Fall ist, werden die Schaltungen beim Stand der Technik wie z.B. in der eingangs genannten Schrift mittels Vorwiderständen angepasst.

Eine solche Anpassung ist aber erstens zeitaufwendig und verhindert zweitens eine automatisierte Herstellung von standardisierten Überwachungseinrichtungen. Die erfindungsgemässe Überwachungseinrichtung soll es nun ermöglichen, dass für verschieden Hilfsspannungen ein einziger Schaltungstyp verwendet werden kann, ohne dass dieser noch angepasst werden muss.

Dies wird dadurch erreicht, dass die Hilfsspannung, welche bei geschlossenem Schalter am Eingang der ersten Mittel (3) liegt, in eine pulsdauermodulierte Impulsfolge umgewandelt wird, deren Einschaltdauer mit zunehmender Höhe der Hilfsspannung abnimmt. Damit ist gewährleistet, dass die Übertragungsmittel (4) mit einer im wesentlichen hilfsspannungsunabhängigen Leistung angesteuert werden.

Eine Anpassung der Schaltung an die Hilfsspannungsquelle entfällt damit ganz.

Als weiterer Vorteil kann die Codierung der Hilfsspannung in eine Pulsdauermodulation in den Auswertmitteln (5) rückgängig gemacht, d.h. decodiert werden. Damit erhält man nicht nur eine hilfsspannungsunabhängige Übertragung der Schalterstellung des Schalters (2), sondern gleichzeitig auch noch eine Information über die Höhe der Hilfsspannung.

Üblicherweise werden Hilfsspannungen von 24 V bis 250 V verwendet. Diese Spannung weist im schlechtesten Fall ein Toleranz von ±25% auf, so dass mit Spannungen von 18 V bis 312 V gerechnet werden muss.

**Figur 2** zeigt ein Ausführungsbeispiel der Detektions- und Umwandlungsmittel (3). Diese ersten Mittel (3) sind aus einem Anpassungsnetzwerk (6) und einem Signalwandler (7) aufgebaut.

Das Anpassungsnetzwerk (6) besteht im wesentlichen aus einem Spannungsbegrenzer (T1), einem Spannungsteiler (R1, R2, C1) und einer Diode (D1). Der Spannungsbegrenzer schützt die Überwachungsanordnung vor Überspannung, indem es die an seinem Eingang anliegende Spannung auf z.B. ±450 V begrenzt.

Im Normalfall liegt bei geschlossenem Schalter die Hilfsspannung Uo an. Diese wird im Spannungsteiler (R1, R2, C1) durch einen durch die Grösse der Widerstände (R1, R2) bestimmten Faktor geteilt. Der Kondensator (C1) dient zur Spannungsglättung. Diese geteilte Spannung wird an den Signalwandler weitergegeben.

Die Hilfsspannung ist zudem über eine Gleichrichterdiode (D1) mit einem Transistor (T2) - vorzugsweise ein Feldeffekttransistor - verbunden. Zusammen mit dem Widerstand (R3) wirkt dieser Transistor als Stromquelle. Dieser Strom fliesst durch die Zenerdiode (D2). Dadurch erhält man einer konstante Spannung, welche mittels des Kondensators (C2) geglättet wird und als stabile Spannungsversorgung für den Signalwandler (7) dient.

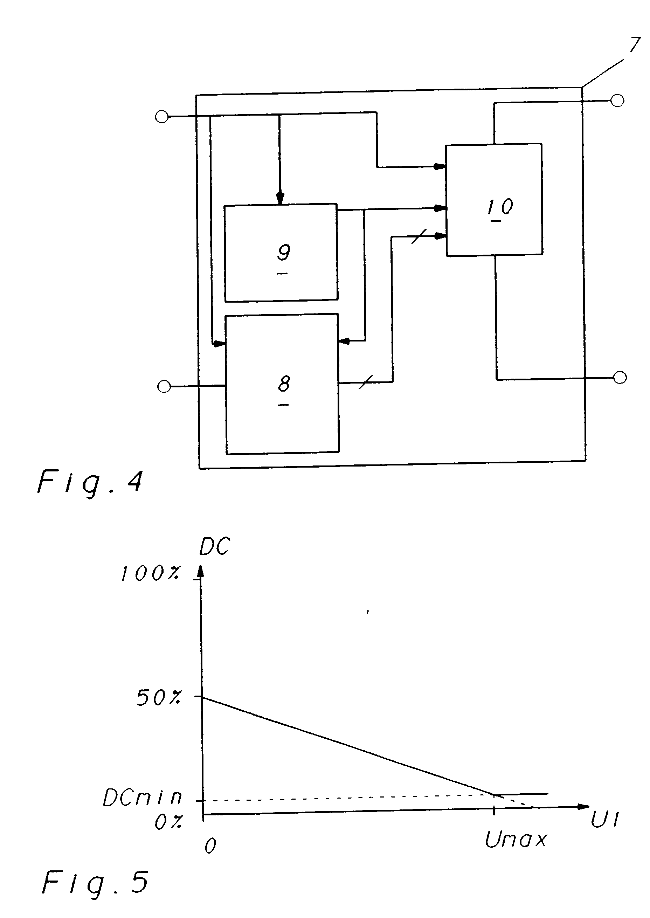

In **Figur 4** ist ein Blockdiagramm des Signalwandlers (7) dargestellt. Der Signalwandler (7) umfasst im wesentlichen einen Oszillator (9), einen A/D-Wandler (8) und einen Pulsdauermodulator (19). Die Hilfsspannung wird im Spannungsteiler (R1, R2, C1) auf ein verarbeitbares Niveau abgesenkt. Der Ausgang des Spannungsteilers steht mit dem Eingang des A/D-Wandlers (8) in Verbindung. Der A/D-Wandler (8) wird durch den Oszillator (9) getaktet. Er wandelt die anliegende, der Hilfsspannung Uo entsprechende Spannung in ein digitales Signal um, welches über mehrere Leitungen an den Pulsdauer-Modulator (10) weitergegeben wird.

Der Pulsdauer-Modulator (10) wandelt das digitale Signal des A/D-Wandlers in eine pulsdauermodulierte Impulsfolge um, deren Einschaltdauer oder Duty-Cycle abhängig vom Wert des anliegenden digitalen Signals ist. Diese Impulsfolge wird an den Ausgang des Pulsdauermodulators (10) weitergegeben.

Auf diese Weise wird bei geschlossenem Schalter die Hilfsspannung Uo in eine pulsdauermodulierte Impulsfolge umgewandelt. Da nur eine Spannung an den ersten Mitteln (3) anliegt, falls der Schalter (1) geschlossen ist, kann also aus dem Vorhandensein einer pulsdauermodulierten Impulsfolge auf die Schalterstellung geschlossen werden.

**Figur 5** zeigt eine bevorzugte Codierungsvorschrift für den Pulsdauermodulator (10). Bei ganz kleinen Spannungswerten (theoretisch gegen 0 V) weist die Impulsfolge eine Einschaltdauer von 50% auf. Bis zu einer bestimmten Maximalspannung (Umax) wird die Einschaltdauer linear mit steigender Spannung gesenkt. Ab der Grenzspannung (Umax) wird die Einschaltdauer konstant auf dem minimalen Wert (DCmin > 0%) gehalten. Dadurch wird es möglich, zwischen 0 V, d.h. keine Spannung am Signalwandler und damit kein Signal, und maximaler Spannung, d.h. ein Signal mit 0% Einschaltdauer und damit auch kein Signal, zu unterscheiden. Selbstverständlich sind aber auch nicht-lineare Codierungsvorschriften denkbar. Im übrigen kann die Codierung in den Auswertmitteln rückgängig gemacht werden, und somit auf die Höhe der Hilfsspannung geschlossen werden.

Der Signalwandler (7) ist in einem bevorzugten Ausführungsbeispiel in einem ASIC integriert. Dadurch kann viel Platz eingespart, und die Zuverlässigkeit des Signalwandlers (7) erhöht werden.

Mit dieser Impulsfolge werden nun die zweiten Mittel (4) angesteuert. Wie **Figur 3** zeigt, bestehen diese Mittel (4) vorzugsweise aus einem Optokoppler (OC). Der pulsförmige Strom der Leuchtdiode des Optokopplers (OC) weist somit eine Einschaltdauer auf, welche mit zunehmender Höhe der Hilfsspannung abnimmt. Damit kann die Überwachungseinrichtung für beliebige Hilfsspannungsquellen (2) verwendet werden.

An der Sekundärseite des Optokopplers (OC) sind die dritten Mittel (5) zur Auswertung der übertragenen Information angeschlossen. Diese Mittel (5) können beispielsweise einen Microcomputer umfassen.

Der Optokoppler (OC) belastet natürlich die Stromversorgung des Signalwandlers (7). Damit verstellt sich die Referenzspannung des A/D-Wandlers. Damit die Messung im A/D-Wandler dennoch möglichst genau erfolgen kann, wird dieser so gesteuert, dass er die anliegende Spannung immer dann umwandelt, wenn der Optokoppler nicht angesteuert wird, mit anderen Worten während der nicht ausgenützten Hälfte der Einschaltdauer der Impulsfolge. Zudem kann auch die Anstiegszeit des Optokopplers in diesen Bereich verlegt werden. Damit können langsame, d.h. billige Optokoppler eingesetzt werden.

Damit der Zeitpunkt des Schliessens des Schalters (1) möglichst genau gemessen werden kann, steuert der Pulsdauermodulator (10) den Optokoppler vorzugsweise derart an, dass der Optokoppler unmittelbar nach dem Schliessen des Schalters eingeschaltet wird. Andernfalls würde sich eine kurze Verzögerungszeit ergeben.

Das erfindungsgemässe Verfahren umfasst einen ersten Schritt, in welchem die Hilfsspannung Uo, welche in Verbindung mit dem Schalter (1) steht, in ein digitales Signal umgewandelt wird. Das digitale Signal wird in einem zweiten Schritt in eine pulsdauermodulierte Impulsfolge transformiert, deren Einschaltdauer mit zunehmender Höhe der Hilfsspannung abnimmt.

Die Vorschrift für die Umwandlung in eine pulsdauermodulierte Impulsfolge entspricht dabei der oben erläuterten Codierung.

Insgesamt steht also mit der Erfindung eine Schalter-Überwachungseinrichtung zur Verfügung, welche ohne Anpassung für unterschiedliche Hilfsspannungen verwendet werden kann. Damit kann die Herstellung solcher Einrichtungen auf einfache Weise standardisiert werden. Zudem wird nicht nur die binäre Information über die Schalterstellung, sondern auch die Höhe der Hilfsspannung detektiert und übertragen.

### Bezeichnungsliste

- 1: Schalter
- 2: Hilfsspannungsquelle
- 3: erste Mittel
- 4: zweite Mittel
- 5: dritte Mittel
- 6: Anpassungsnetzwerk
- 7: Signalwandler
- 8: A/D-Wandler
- 9: Oszillator
- 10: PWM-Modulator

- T1: Spannungsbegrenzer
- T2: MOSFET
- R1-R4: Widerstände
- C1-C3: Kondensatoren
- D1: Gleichrichterdiode
- D2: Zenerdiode
- Uo: Hilfsspannung
- U1: reduzierte Hilfsspannung
- U2: geregelte Spannung
- OC: Optokoppler
- DCmin: Minimale Einschaltdauer
- Umax: obere Spannungsgrenze
- DC: Einschaltdauer (Duty-Cycle)

## Patentansprüche

1. Vorrichtung zur Überwachung der Schalterstellung eines Schalters (1) umfassend
a) eine Hilfsspannungsquelle (2), welche in Verbindung mit dem Schalter (1) steht und bei geschlossenem Schaltkontakt des Schalters (1) eine bestimmte Spannung Uo abgibt;
b) erste Mittel (3) zur Detektion der Schalterstellung sowie zur Umwandlung der detektierten Schalterstellung in ein elektrisches Signal, wobei die ersten Mittel (3) mit dem Schalter (1) und der Hilfsspannungsquelle (2) verbindbar sind, derart dass bei geschlossenem Schaltkontakt die Spannung Uo an den ersten Mitteln (3) anliegt;
c) zweite Mittel (4) zur Übertragung des elektrischen Signals, welche zweiten Mittel (4) mit den ersten (3) verbindbar sind, wobei
d) die ersten und zweiten Mittel (3 bzw. 4) von der Hilfsspannungsquelle (2) mit elektrischer Energie versorgt werden; und
e) dritte Mittel (5) zur Auswertung des von den zweiten Mitteln (4) übertragenen elektrischen Signals;
dadurch gekennzeichnet, dass
f) die ersten Mittel (3) bei geschlossenem Schaltkontakt die anliegende Spannung Uo in eine pulsdauermodulierte Impulsfolge bestimmter Einschaltdauer umwandeln, wobei
g) die Einschaltdauer um so kürzer ist, je höher die Spannung Uo ist.

2. Vorrichtung nach Anspruch 1, dadurch gekennzeichnet, dass die ersten Mittel (3) ein Anpassungsnetzwerk (6) und einen Signalwandler (7) umfassen.

3. Vorrichtung nach Anspruch 2, dadurch gekennzeichnet, dass
a) das Anpassungsnetzwerk (6) umfasst:
i) einen Spannungsbegrenzer (T1), einen Spannungsteiler (R1-R2, C1), welcher die Spannung Uo auf den Wert U1 reduziert, sowie eine Diode (D1);
ii) einen Spannungsregler im wesentlichen bestehend aus einer Stromquelle (T2, R3), einer Zenerdiode (D2) sowie Glättungskondensatoren (C2-C3) und einem Anpasswiderstand (R4), welcher Spannungsregler eine geregelte Spannung U2 abgibt; wobei
iii) der Spannungsbegrenzer mit der Hilfsspannungsquelle verbunden ist, und der Spannungsregler über die Diode (D1) mit dem Spannungsbegrenzer verbunden ist;
b) der Signalwandler (7) vom Spannungsregler gespeist wird und zudem mit dem Ausgang des Spannungsteilers verbunden ist.

4. Vorrichtung nach Anspruch 3, dadurch gekennzeichnet, dass der Signalwandler (7) umfasst:
a) einen A/D-Wandler (8), dessen Eingang mit dem Ausgang des Spannungsteilers verbunden ist und welcher A/D-Wandler (8) die an seinem Eingang anliegende Spannung U1 in ein digitales Signal umwandelt und an seinen Ausgang gibt;
b) einen Pulsdauer-Modulator (10), dessen Eingang mit dem digitalen Ausgang des A/D-Wandlers (8) in Verbindung steht und das digitale Ausgangssignal des A/D-Wandlers (8) periodisch in eine pulsdauermodulierte Impulsfolge umwandelt und an seinen Ausgang gibt; sowie
c) einen Oszillator (9), welcher ein Clock-Signal abgibt, durch welches der A/D-Wandler (8) und der Pulsdauer-Modulator (10) getaktet werden.

5. Vorrichtung nach Anspruch 2, 3, oder 4, dadurch gekennzeichnet, dass der Signalwandler (7) in einem ASIC integriert ist.

6. Vorrichtung nach Anspruch 5, dadurch gekennzeichnet, dass die zweiten Mittel (4) einen Optokoppler (OC) umfassen, welcher durch den Spannungsregler gespeist und durch die pulsdauermodulierte Impulsfolge des Pulsdauermodulators (10) angesteuert, d.h. ein- und ausgeschaltet wird.

7. Vorrichtung nach Anspruch 6, dadurch gekennzeichnet, dass der Pulsdauermodulator (10) den Optokoppler (OC) derart ansteuert, dass der Optokoppler (OC) unmittelbar nach Schliessen des Schalters (1) eingeschaltet ist.

8. Vorrichtung nach einem der Ansprüche 1-6, dadurch gekennzeichnet, dass die Einschaltdauer der pulsdauermodulierten Impulsfolge linear mit zunehmender Höhe der Hilfsspannung Uo abnimmt.

9. Verfahren zur Überwachung einer Schalterstellung eines Schalters (1), wobei
a) der Schalter (1) mit einer Hilfsspannungsquelle (2) verbunden ist, welche Hilfsspannungsquelle (2) eine bestimmte Spannung Uo abgibt;
dadurch gekennzeichnet, dass
b) bei geschlossenem Schaltkontakt des Schalter (1) die Spannung Uo periodisch in ein digitales Signal umgewandelt wird und anschliessend
c) das digitale Signal in ein pulsdauermoduliertes Signal umgewandelt wird, wobei
d) die Einschaltdauer des pulsdauermodulierten Signals um so kleiner gewählt wird, je höher die Spannung Uo ist.

10. Verfahren nach Anspruch 9, dadurch gekennzeichnet, dass
a) die Einschaltdauer des pulsdauermodulierten Signals für eine obere Grenze (Umax) der Spannung Uo auf einen minimalen Wert (DCmin) begrenzt wird;
b) die Einschaltdauer für Uo = 0 V auf 50% begrenzt wird und zwischen 50 % und dem minimalen Wert (DCmin) linear abnimmt.

## Claims

1. Device for monitoring the switch position of a switch (1), comprising
a) an auxiliary voltage source (2), which is connected to the switch (1) and emits a determined voltage Uo when the switching contact of the switch (1) is closed;
b) first means (3) for the detection of the switch position and for the conversion of the detected switch position into an electrical signal, the first means (3) being connectable to the switch (1) and the auxiliary voltage source (2), in such a manner that, when the switching contact is closed, the voltage Uo is present at the first means (3);
c) second means (4) for the transmission of the electrical signal, which second means (4) are connectable to the first (3),
d) the first and second means (3 and 4) being supplied with electrical energy by the auxiliary voltage source (2); and
e) third means (5) for the evaluation of the electrical signal transmitted by the second means (4);
characterized in that
f) when the switching contact is closed, the first means (3) convert the voltage present Uo into a pulse-duration-modulated pulse sequence of determined duty cycle, in which
g) the higher the voltage Uo, the shorter the duty cycle.

2. Device according to Claim 1, characterized in that the first means (3) comprise an adaptation network (6) and a signal converter (7).

3. Device according to Claim 2, characterized in that
a) the adaptation network (6) comprises:
i) a voltage limiter (T1), a voltage divider (R1-R2, C1), which reduces the voltage Uo to the value U1, as well as a diode (D1);
ii) a voltage regulator essentially comprising a current source (T2, R3), a Zener diode (D2) and smoothing capacitors (C2-C3) and an adaptation resistor (R4), which voltage regulator emits a regulated voltage U2;
iii) the voltage limiter being connected to the auxiliary voltage source, and the voltage regulator being connected via the diode (D1) to the voltage limiter;
b) the signal converter (7) is powered by the voltage regulator and in addition is connected to the output of the voltage divider.

4. Device according to Claim 3, characterized in that the signal converter (7) comprises:
a) an A/D converter (8), the input of which is connected to the output of the voltage divider and which A/D converter (8) converts the voltage U1 present at its input into a digital signal and passes the same to its output;
b) a pulse-duration modulator (10), the input of which is connected to the digital output of the A/D converter (8) and periodically converts the digital output signal of the A/D converter (8) into a pulse-duration-modulated pulse sequence and passes the same to its output; and
c) an oscillator (9), which emits a clock signal, by which the A/D converter (8) and the pulse-duration modulator (10) are clocked.

5. Device according to Claim 2, 3 or 4, characterized in that the signal converter (7) is integrated in an ASIC.

6. Device according to Claim 5, characterized in that the second means (4) comprise an optocoupler (OC), which is powered by the voltage regulator and is driven, i.e. energized and de-energized, by the pulse-duration-modulated pulse sequence of the pulse-duration modulator (10).

7. Device according to Claim 6, characterized in that the pulse-duration modulator (10) drives the optocoupler (OC) in such a manner that the optocoupler (OC) is energized immediately after closing of the switch (1).

8. Device as claimed in one of claims 1-6, characterized in that the duty cycle of the pulse-duration-modulated pulse sequence decreases linearly as the auxiliary voltage Uo increases.

9. Process for monitoring a switch position of a switch (1), in which
a) the switch (1) is connected to an auxiliary voltage source (2), which auxiliary voltage source (2) emits a determined voltage Uo;
characterized in that
b) when the switching contact of the switch (1) is closed, the voltage Uo is periodically converted into a digital signal and subsequently
c) the digital signal is converted into a pulse-duration-modulated signal, in which
d) the higher the voltage Uo, the smaller the duty cycle of the pulse-duration-modulated signal is selected to be.

10. Process according to Claim 9, characterized in that
a) the duty cycle of the pulse-duration-modulated signal is limited to a minimum value (DCmin) for an upper limit (Umax) of the voltage Uo;
b) for Uo = 0 V, the duty cycle is limited to 50% and decreases linearly between 50% and the minimum value (DCmin).

## Revendications

1. Dispositif de surveillance de la position d'un commutateur (1) comprenant
a) une source de tension auxiliaire (2) qui est reliée au commutateur (1) et qui délivre une tension Uo définie lorsque le contact du commutateur (1) est fermé ;
b) des premiers moyens (3) pour détecter la position du commutateur et pour convertir la position détectée du commutateur en un signal électrique, les premiers moyens (3) pouvant être reliés avec le commutateur (1) et la source de tension auxiliaire (2) de telle manière à ce que lorsque le contact du commutateur est fermé, la tension Uo est appliquée sur les premiers moyens (3) ;
c) deuxièmes moyens (4) pour transmettre le signal électrique, lesquels deuxièmes moyens (4) pouvant être reliés avec les premiers (3),
d) les premiers et les deuxièmes moyens (3 ou 4) étant alimentés en énergie électrique par la source de tension auxiliaire (2) ; et
e) troisièmes moyens (5) pour analyser le signal électrique transmis par les deuxièmes moyens (4) ;
caractérisé par le fait que
f) les premiers moyens (3), lorsque le contact du commutateur est fermé, convertissent la tension Uo appliquée en un train d'impulsions à modulation d'impulsion en largeur ayant un certain facteur de service,
g) le facteur de service étant d'autant plus bas que la tension Uo est élevée.

2. Dispositif selon la revendication 1, caractérisé par le fait que les premiers moyens (3) comprennent un réseau d'adaptation (6) et un convertisseur de signal (7).

3. Dispositif selon la revendication 2, caractérisé par le fait que
a) le réseau d'adaptation (6) comprend :
i) un limiteur de tension (T1), un diviseur de tension (R1-R2, C1) qui réduit la tension Uo à la valeur U1 et une diode (D1) ;
ii) un régulateur de tension composé pour l'essentiel d'une source de courant (T2, R3), d'une diode zener (D2) et de condensateurs de lissage (C2-C3) et d'une résistance d'adaptation (R4) , lequel régulateur de tension délivre une tension régulée U2 ;
iii) le limiteur de tension étant relié à la source de tension auxiliaire et le régulateur de tension étant relié au limiteur de tension par le biais de la diode (D1) ;
b) le convertisseur de signal (7) est alimenté par le régulateur de tension et, en plus de cela, il est relié à la sortie du diviseur de tension.

4. Dispositif selon la revendication 3, caractérisé par le fait que le convertisseur de signal (7) comprend :
a) un convertisseur A/N (8) dont l'entrée est reliée à la sortie du diviseur de tension et lequel convertisseur A/N (8) convertit la tension U1 appliqué à son entrée en un signal numérique et le délivre à sa sortie ;
b) un modulateur de largeur d'impulsion (10) dont l'entrée est reliée avec la sortie numérique du convertisseur A/N (8) et qui convertit périodiquement le signal de sortie numérique du convertisseur A/N (8) en un train d'impulsions modulées en largeur d'impulsion et le délivre à sa sortie ; et
c) un oscillateur (9) qui délivre un signal d'horloge qui commande de manière cyclique le convertisseur A/N (8) et le modulateur de largeur d'impulsion (10).

5. Dispositif selon la revendication 2, 3 ou 4, caractérisé par le fait que le convertisseur de signal (7) est intégré dans un ASIC.

6. Dispositif selon la revendication 5, caractérisé par le fait que les deuxièmes moyens (4) comprennent un optocoupleur (OC) qui est alimenté par le biais du régulateur de tension et qui est excité, c'est-à-dire activé et désactivé, par le biais du train d'impulsions à modulation d'impulsion en largeur du modulateur de largeur d'impulsion (10).

7. Dispositif selon la revendication 6, caractérisé par le fait que le modulateur de largeur d'impulsion (10) excite l'optocoupleur (OC) de telle manière que l'optocoupleur (OC) est activé immédiatement après la fermeture du commutateur (1).

8. Dispositif selon l'une des revendications 1-6, caractérisé par le fait que le facteur de service du train d'impulsions modulées en largeur d'impulsion diminue de façon linéaire lorsque le niveau de la tension auxiliaire Uo augmente.

9. Procédé de surveillance de la position d'un commutateur (1),
a) le commutateur (1) étant relié avec une source de tension auxiliaire (2), laquelle source de tension auxiliaire (2) délivre une tension Uo bien précise ;
caractérisé par le fait que
b) lorsque le contact du commutateur (1) est fermé, la tension Uo est convertie périodiquement en un signal numérique et ensuite
c) le signal numérique est converti en un train d'impulsions modulées en largeur d'impulsion,
d) le facteur de service du signal modulé en largeur d'impulsion étant choisi d'autant plus bas que la tension Uo est élevée.

10. Procédé selon la revendication 9, caractérisé par le fait que
a) le facteur de service du signal modulé en largeur d'impulsion est limité pour un seuil supérieur (Umax) de la tension Uo à une valeur minimale (DCmin) ;
b) le facteur de service pour Uo = 0 V est limité à 50 % et il diminue de façon linéaire entre 50 % et la valeur minimale (DCmin).
